# EUROPÄISCHE PATENTSCHRIFT

(11) **EP 0 675 929 B1**
(45) Veröffentlichungstag und Bekanntmachung des Hinweises auf die Patenterteilung: **06.08.1997**
(21) Anmeldenummer: 94902745.2
(22) Anmeldetag: 10.12.1993
(51) Int. Cl.: C09G 1/04

(54) **NEUTRALE SELBSTGLANZEMULSION ZUR PFLEGE VON FUSSBÖDEN (I)**
NEUTRAL AUTO-GLOSS EMULSION FOR FLOOR MAINTENANCE (I)
EMULSION NEUTRE AUTOBRILLANTE POUR L'ENTRETIEN DE SOLS (I)

(30) Priorität: 22.12.1992 DE 4243469
(43) Veröffentlichungstag der Anmeldung: 11.10.1995
(73) Patentinhaber: Henkel-Ecolab GmbH & Co. OHG, 40554 Düsseldorf (DE)
(72) Erfinder: SKODELL, Birgit, D-40489 Düsseldorf (DE); OSBERGHAUS, Rainer, D-40593 Düsseldorf (DE); ROGMANN, Karl-Heinz, D-40880 Ratingen (DE); FAUBEL, Heiko, D-42929 Wermelskirchen (DE); LENZ, Ulrike, D-40764 Langenfeld (DE)
(74) Vertreter: Wilk, Hans-Christof, Dr.
(86) Internationale Anmeldenummer: EP9303485
(87) Internationale Veröffentlichungsnummer: WO9414907

(56) Entgegenhaltungen:
- EP-A- 0 041 834
- EP-A- 0 334 039
- EP-A- 0 449 038
- US-A- 4 460 734

## Beschreibung

Die vorliegende Erfindung betrifft ein Mittel zur Pflege von Fußböden, das in Form einer Dispersion vorliegt und auf dem Fußboden selbstglänzend auftrocknet. Derartige Mittel werden auch als Selbstglanzemulsionen bezeichnet.

Neue, bisher unbehandelte Fußböden und solche, die einer Grundreinigung unterzogen worden sind, werden heute zum Schutz vor Anschmutzungen und Beschädigungen ganz überwiegend mit Hilfe von Selbstglanzemulsionen gepflegt. Beispiele derartiger Emulsionen finden sich in der europäischen Patentanmeldung EP 41 834 und in der amerikanischen Patentschrift US 4 460 734. Diese Mittel, die Wachs und/oder filmbildende Polymere in wechselnder Zusammensetzung enthalten, bilden auf den Fußböden nach dem Abtrocknen geschlossene glänzende Filme aus, die schmutzabweisend wirken. Dabei können Filme, die einen hohen Wachsanteil aufweisen, leicht zusätzlich poliert werden und sind bei Bedarf auch leicht wieder von den Oberflächen zu entfernen, während Filme, die überwiegend oder vollständig aus filmbildenden Polymeren bestehen, besonders widerstandsfähig gegen mechanische Beanspruchung sind. Ein Problem, das bei allen Selbstglanzemulsionen bis heute nicht vollständig gelöst ist, liegt darin, daß die Emulsionen bzw. Dispersionen ganz gleichmäßig auf den Oberflächen eintrocknen müssen, wenn ein vollständig geschlossener Schutzfilm entstehen soll. Sehr häufig ist zu beobachten, daß der zunächst geschlossene Film der wäßrigen Dispersion beim Eintrocknen aufreißt und sich unter Umständen sogar zu einzelnen Tropfen zusammenzieht, so daß der entstehende Pflegefilm ein fleckiges Aussehen erhält. Besonders stark ist dieser Effekt bei den heute bevorzugten Dispersionen mit weitgehend neutralem pH-Wert. Hier eine Verbesserung zu schaffen, war eine der Aufgaben der vorliegenden Erfindung. Gleichzeitig sollte die Stabilität der Dispersionen, vor allem bei Lagerung in der Kälte, verbessert werden.

Gegenstand der Erfindung ist eine wäßrige Selbstglanzemulsion zur Pflege von Fußböden, die in unverdünntem Zustand einen pH-Wert zwischen 5 und 9 aufweist, und die eine wenigstens teilweise wasserunlösliche Polymerver bindung mit einer minimalen Filmbildetemperatur zwischen 0 und 70 °C oder ein Gemisch mehrerer Polymerverbindungen, das diese Eigenschaft aufweist, und 0.05 bis 11.0 Gew.-% eines Alkohols aus der Gruppe Benzylalkohol, 2-Phenylethanol, 2-Phenoxyethanol und -deren Gemische enthält. Besonders bevorzugt sind Polymer dispersionen, deren pH-Wert im unverdünnten Zustand zwischen 6 und 9 liegt.

Die neuen Selbstglanzemulsionen zeichnen sich durch hohe Lagerstabilität, insbesondere auch bei niedrigen Temperaturen, aus. Besonders bemerkenswert ist das außerordentlich gleichmäßige Antrockenverhalten, bei dem ein Aufreißen des Films praktisch nicht zu beobachten ist, so daß gleichmäßige, optisch einwandfreie Pflegefilme resultieren.

Bei den in den Selbstglanzemulsionen enthaltenen Polymerverbindungen handelt es sich um solche, die in Wasser bei neutralem pH-Wert wenigstens teilweise unlöslich sind und die eine minimale Filmbildetemperatur im Bereich zwischen 0 und 70 °C aufweisen. Es handelt sich dabei vorzugsweise um Polymere, die aus ethylenisch ungesättigten Monomeren hergestellt werden. Beispiele derartiger Monomerer sind Styrol, Acrylsäureester oder Methacrylsäureester aliphatischer, 1 bis 8 C-Atome aufweisender Alkohole, Acrylnitril, Vinylacetat, Acrylsäure und Methacrylsäure. Besonders bevorzugt werden Poly(meth)acrylate aus zwei oder mehr dieser Monomeren, die gegebenenfalls in untergeordneter Menge auch weitere Monomere enthalten können. Ganz besonders bevorzugte Polymere enthalten 1 bis 30 Gew.- Teile an carbonsäuregruppenhaltigen Monomeren, 30 bis 70 Gew.-Teile Monomere, die Homopolymere mit Glastemperaturen unter 20 °C bilden, vorzugsweise Ester der Acrylsäure mit C₁-C₈-Alkoholen und/oder der Methacrylsäure mit C₄-C₈-Alkoholen und 30 bis 70 Gew.-Teile Monomere, die Homopolymere mit Glastemperaturen über Raumtemperatur bilden, vorzugsweise Methacrylsäureester von C₁-C₃-Alkoholen oder Styrol. Werden in der Polymerdispersion mehrere unterschiedliche Polymerverbindungen der vorstehend genannten Art im Gemisch eingesetzt, soll die Filmbildetemperatur; die für das Gemisch ermittelt wird, im Bereich zwischen 0 und 70 °C liegen. Die genannten Filmbildungstemperaturen beziehen sich auf das weichmacherfreie System, d. h. auf die Polymeren ohne weitere Zusätze. Beispiele derartiger filmbildender Polymerer sind folgende, als Dispersionen angebotene Handelsprodukte: Licomer A 41 (Firma Hoechst), Neocryl A 349 (Firma ICI) Primal B 527 (Firma Rohm und Haas).

Carboxylatgruppen enthaltenden Polymeren können bei Bedarf auch Schwermetallionen, beispielsweise Zinkionen, zugesetzt werden, die beim Eintrocknen zu besonders widerstandsfähigen Filmen führen. Beispiele von Polymerdispersionen des Handels, die Metallsalze enthalten, sind Ubatol TS 85 (Firma Stapol), Neocryl SR 267 (Firma ICI), Primal B 1604 (Firma Rohm und Haas).

Als ein weiterer Typ von filmbildenden Polymeren, die zusammen mit Poly(meth)acrylaten verwendet werden können, müssen noch Polyurethane erwähnt werden, die ebenfalls für diesen Zweck im Handel angeboten werden. Beispiele geeigneter Polyurethandispersionen sind etwa Alberdingk U 210 W (Firma Alberdingk Boley) und Neorez 986 (Firma Polyvinyl).

Die Polymeren sind in den erfindungsgemäßen Mitteln, vorzugsweise in Mengen zwischen 10 und 50 Gew.-%, insbesondere zwischen 11 und 20 Gew.-% enthalten. Diese Zahlenangaben beziehen sich auf die reinen Polymeren. Wird bei der Herstellung der erfindungsgemäßen Dispersionen bereits von dispergierten Polymeren ausgegangen, so wie sie vielfach im Handel angeboten werden, sind von diesen Dispersionen entsprechend höhere Mengen bei der Herstellung der erfindungsgemäßen Mittel zu verwenden. Polyurethane können in den Mitteln mit bis zu 15 Gew.-%, vorzugsweise mit 2 bis 8 Gew.-% vertreten sein.

Neben den vorstehend genannten filmbildenden Polymeren, die den überwiegenden Teil der Feststoffe im erfindungsgemäßen Mittel ausmachen, können die Mittel Wachse in dispergierter Form enthalten. Der Wachsanteil dient dazu, die entstehenden Pflegefilme in gewissen Grenzen polierbar zu machen. Als Wachse eignen sich sowohl natürliche Wachse als auch synthetische Wachse, die natürlichen Ursprungs aber auch vollsynthetisch hergestellt sein können. Beispiele sind Polyethylenwachse, oxidierte Polyethylenwachse, Montanesterwachse, Paraffinwachse, Candellilawachs und Carnaubawachs. Von diesen werden in den erfindungsgemäßen Mitteln Polyethylenwachse bevorzugt. Der Gehalt an Wachsen kann bis zu 20 Gew.-% des Mittels betragen, wobei vorzugsweise wenigstens 1 Gew.-% verwendet wird. Vorzugsweise liegt der Gehalt zwischen 1 und 10 Gew.-%, insbesondere bei Verwendung von Polyethylenwachsen.

Bei dem zweiten kennzeichnenden Bestandteil der erfindungsgemäßen Selbstglanzemulsion handelt es sich um einen aromatischen Alkohol aus der Gruppe Benzylalkohol, 2-Phenylethanol und 2-Phenoxyethanol, wobei selbstverständlich auch Gemische dieser Alkohole verwendet werden können. Diese Alkohole scheinen im Zusammenwirken mit den filmbildenden Polymeren in der wäßrigen neutralen Emulsion für die oben geschilderten unerwarteten Eigenschaften der neuen Mittel verantwortlich zu sein. Im allgemeinen reichen geringe Mengen dieser Alkohole aus. Ihr Anteil an den erfindungsgemäßen Mitteln beträgt 0,05 bis 11 Gew.-%, vorzugsweise 1 bis 5 Gew.-%.

Neben den vorstehend genannten Inhaltsstoffen können die erfindungsgemäßen Selbstglanzemulsionen weitere Wirk- und Hilfsstoffe in geringeren Mengen enthalten. Als Beispiele seien Weichmacher, Emulgatoren, Netz- und Verlaufshilfsmittel, Netzharze, Konservierungsmittel und Parfümöle genannt.

Weichmacher dienen zur Modifizierung der Filmkonsistenz, wobei man zwischen temporären Weichmachern und permanenten Weichmachern unterscheidet. Bei den temporären Weichmachern handelt es sich um flüchtige hydrophile Lösungsmittel, die das Zusammenlaufen der Polymerteilchen bei der Filmbildung begünstigen. Beispiele sind Ethylenglykol, Diethylenglykol sowie Glykol- und Polyglykolether. Ihr Anteil an den erfindungsgemäßen Mitteln liegt im allgemeinen nicht über 15 Gew.-%, vorzugsweise zwischen 0,5 und 10 Gew.-%. Permanente Weichmacher sind Flüssigkeiten, die unter Normalbedingungen nicht flüchtig sind, so daB mit deren Hilfe die Beschaffenheit des Pflegefilms anhaltend beeinflußt werden kann. Beispiele derartiger Weichmacher sind Dibutylphthalat, Tributylphosphat, Tributoxyethylphosphat und N-Methylcaprolactam. Auch dieser Weichmachertyp ist in den erfindungsgemäßen Suspensionen im allgemeinen zu nicht mehr als 15 Gew.-% enthalten. Bevorzugt wird ein Gehalt an 0,5 bis 10 Gew.-%.

Netz- und Verlaufshilfsmittel dienen dazu, die Benetzung der behandelten Oberfläche beim Auftrag der Selbstglanzemulsion zu verbessern; außerdem wird dadurch die Verdünnung der Mittel mit Wasser, beispielsweise beim Auftragen auf feuchte Fußböden, erleichert. Verwendbar sind die üblichen Tenside, insbesondere nichtionische und anionische Tenside, beispielsweise Ethoxylate von langkettigen Alkoholen oder Alkylbenzolsulfonate und Fettalkoholsulfate. Sehr häufig werden hier auch Fluortenside verwendet, die eine besonders starke Erniedrigung der Grenzflächenspannung bewirken. Der Gehalt an Netz- und Verlaufshilfsmitteln liegt im allgemeinen nicht über 5 Gew.-%, bezogen auf das Gesamtgewicht der Selbstglanzemulsion. Vorzugsweise liegt der Gehalt zwischen 0,1 und 2 Gew.-%. Auch mit Hilfe von Netzharzen kann die Benetzung der Oberfläche beim Auftrag verbessert werden. Bei diesen Harzen handelt es sich vorzugsweise um Styrol-Maleinatharze oder klargestellte Polyacrylate. Ihr Gehalt in den Mitteln liegt im allgemeinen nicht über 5 Gew.-%, vorzugsweise werden zwischen 0,1 und 2 Gew.-% eingesetzt.

Die Herstellung der Mittel kann nach üblichen Mischverfahren erfolgen. Im allgemeinen wird man von einer vorgefertigten Polymerdispersion, wie sie im Handel erhältlich ist, ausgehen oder eine Dispersion des Polymeren in an sich bekannter Weise in Wasser herstellen. Sofern die Selbstglanzemulsion auch Wachs enthalten soll, kann dieses zunächst getrennt zu einer Emulsion in Wasser, gegebenenfalls unter Zusatz geeigneter Vachsemulgatoren, verarbeitet und in dieser Form der Polymerdispersion zugesetzt werden. Unter Rühren können dann die übrigen Bestandteile in dieses Gemisch eingetragen werden. Der pH-Wert der Mittel wird gegebenenfalls mit Hilfe von Alkalien oder Säuren auf den gewünschten Wert im neutralen pH-Bereich (pH 5 bis pH 9) eingestellt.

Die Anwendung der erfindungsgemäßen Selbstglanzemulsionen erfolgt in der Regel unverdünnt: Die Emulsionen werden auf die Oberfläche aufgetragen und dort mit Hilfe eines weichen Gegenstandes, beispielsweise eines Schwamms oder eines Lappens, gleichmäßig in der gewünschten Menge verteilt. Nach dem Verdunsten des Wassers verbleibt bei diesem Pflegeverfahren ein außerordentlich gleichmäßiger glänzender Pflegefilm.

### Beispiele

Ausgehend von vorgefertigten Polymerdispersionen wurden die im folgenden beschriebenen Mittel durch Mischen der in den Tabellen 1 und 2 genannten Komponenten hergestellt. Die in den Tabellen angegebenen Zahlen sind, soweit nichts anderes angeführt ist, Gewichtsprozente, und beziehen sich auf die reinen Wirkstoffe. Die so hergestellten Selbstglanzemulsionen 1 bis 8 wurden dann auf ihre Beständigkeit bei Lagerung in der Kälte und auf ihre Verlaufseigenschaften hin geprüft.

Zur Beurteilung der Kältestabilität wurden die Proben bei 0 - 3 °C für 12 Wochen eingelagert. Während dieser Zeit wurden die Proben wöchentlich aus dem Gefrierschrank genommen und nach Erreichen der Raumtemperatur visuell beurteilt. Sichtbare Zeichen der Instabilität waren Ausflockungen, Bodensatz, Aufschemmungen und Änderung der Viskosität. Die Bewertung wurde nach folgendem Maßstab vorgenommen:
0 einheitliche, homogene Probe
1 leichte Aufschwemmungen oder Bodensatz nach 12 Wochen
2 leichte Aufschwemmungen oder Bodensatz nach 3 Wochen
3 mittlere Aufschwemmung oder Bodensatz nach 3 Wochen
4 starke Aufschweeeungen oder Bodensatz nach 3 Wochen
5 sehr starke Aufschwemmungen oder Bodensatz nach 3 Wochen

Die Verlaufeigenschaften wurden durch praxisgerechte Anwendung auf schwarzen, unbehandelten PVC-Bahnen ermittelt. Dazu wurden je Prüfvorgang 10 ml der zu prüfenden Suspension mit Hilfe eines Handauftraggerätes auf eine 30 x 60 cm große PVC-Platte gleichmäßig verteilt. Das Auftraggerät bestand aus einem, auf einen Rahmen gespannten Polstervelourstoff, dessen wirksame Fläche 20 x 5,5 cm betrug. Nach dem Abtrocknen wurde das Aussehen der Oberfläche visuell nach folgender Skala beurteilt:
0 streifenfrei
1 schwach sichtbare gleichförmige Streifen
2 deutlich sichtbare Streifen
3 deutliche ungleichförmige Streifen
4 starke unregelmäßige Rückstände.

**Tabelle 1**

| Beispiel | 1 | 2 | 3 | 4 |
|---|---|---|---|---|
| Na-Benzoat | 0,05 | - | - | - |
| Chloracetamid | 0,1 | - | - | - |
| Tributoxyethylphosphat | 2,2 | 2,2 | 2,2 | 2,2 |
| Phthalsäuredibutylester | 1,2 | 1,2 | 1,2 | 1,2 |
| Polyacrylat MFT 72 °C * | 7,5 | 7,5 | 7,5 | 7,5 |
| Polyurethan (Neorez 986) | 5,0 | 5,0 | 5,0 | 5,0 |
| Polyethylendispersion | 1,0 | 1,0 | 1,0 | 1,0 |
| Acryl-Styrol-Coplymer MFT 55 °C * | 8,5 | 8,5 | 8,5 | 8,5 |
| Zonyl FSJ (Fluortensid) | 0,02 | 0,02 | 0,02 | 0,02 |
| Ethylenglykol | 1,0 | 1,0 | 1,0 | 1,0 |
| Parfüm | 0,2 | 0,2 | 0,2 | 0,2 |
| 2-Phenoxyethanol | - | 2,0 | - | - |
| 2-Phenylethanol | - | - | 1,0 | - |
| Benzylalkohol | - | - | - | 1,0 |
| Wasser | zu 100 | zu 100 | zu 100 | zu 100 |
| pH-Wert | 8,7 | 8,7 | 8,7 | 8,7 |
| Lagerstabilität bei 0 - 3 °C | 3 | 0 | 0 | 0 |
| Verlaufseigenschaften | 4 | 0 | 0 | 0 |

| | | | | |
|---|---|---|---|---|
| * MFT = minimale Filmbildetemperatur | | | | |

**Tabelle 2**

| Beispiel | 5 | 6 | 7 | 8 |
|---|---|---|---|---|
| Na-Benzoat | 0,05 | - | - | - |
| Chloracetamid | 0,1 | - | - | - |
| Tributoxyethylphosphat | 1,6 | 1,6 | 1,6 | 1,6 |
| Phthalsäuredibutylester | 1,0 | 1,0 | 1,0 | 1,0 |
| Polyacrylat MFT 53 °C | 14 | 14 | 14 | 14 |
| Polyethylendispersion | 3,5 | 3,5 | 3,5 | 3,5 |
| Zonyl FSJ | 0,02 | 0,02 | 0,02 | 0,02 |

| Beispiel | 5 | 6 | 7 | 8 |
|---|---|---|---|---|
| Ethylenglykol | 1,0 | 1,0 | 1,0 | 1,0 |
| Parfüm | 0,2 | 0,2 | 0,2 | 0,2 |
| 2-Phenoxyethanol | - | 2,0 | - | - |
| 2-Phenylethanol | - | - | 1,0 | - |
| Benzylalkohol | - | - | - | 1,0 |
| Wasser | zu 100 | zu 100 | zu 100 | zu 100 |
| pH-Wert | 8,7 | 8,7 | 8,7 | 8,7 |
| Lagerstabilität bei 0 - 3 °C | 3 | 0 | 0 | 0 |
| Verlaufseigenschaften | 4 | 0 | 0 | 0 |

Aus den Prüfergebnissen sind die ungewöhnlich vorteilhaften Eigenschaften der erfindungsgemäßen Selbstglanzemulsionen 2 - 4 und 6 -8 gegenüber den nicht erfindungsgemäßen Mitteln 1 und 5 deutlich zu erkennen.

## Patentansprüche

1. Wäßrige Selbstglanzemulsion zur Pflege von Fußböden, die im unverdünnten Zustand einen pH-Wert zwischen 5 und 9 aufweist, enthaltend eine wenigstens teilweise wasserunlösliche Polymerverbindung mit einer minimalen Filmbildetemperatur zwischen 0 und 70 °C oder ein Gemisch mehrerer Polymerverbindungen, das diese Eigenschaft aufweist, und 0,05 bis 11 Gew.-% eines Alkohols aus der Gruppe Benzylalkohol, 2-Phenylethanol, 2-Phenoxyethanol und deren Gemische.

2. Selbstglanzemulsion nach Anspruch 1, deren pH-Wert im unverdünnten Zustand zwischen 6 und 9 liegt.

3. Selbstglanzemulsion nach einem der Ansprüche 1 oder 2, bei der der Gehalt an filmbildenden Polymeren zwischen 10 und 50 Gew.-%, vorzugsweise zwischen 11 und 20 Gew.-% liegt.

4. Selbstglanzemulsion nach einem der Ansprüche 1 bis 3, die weiterhin 1 bis 20 Gew.-% an Wachs aus der Gruppe der Polyethylenwachse, der oxidierten Polyethylenwachse, der Montanesterwachse, der Paraffinwachse, der natürlichen Wachse und deren Gemische enthält.

5. Selbstglanzemulsion nach Anspruch 4, die 1 bis 10 Gew.-% an Polyethylenwachs enthält.

6. Selbstglanzemulsion nach einem der Ansprüche 1 bis 5, die als filmbildendes Polymer überwiegend Poly(meth)acrylat enthält.

7. Selbstglanzemulsion nach einem der Ansprüche 1 bis 6, die 1 bis 5 Gew.-% eines Alkohols aus der Gruppe Benzylalkohol, 2-Phenylethanol, 2-Phenoxyethanol und deren Gemische enthält.

8. Verwendung einer Selbstglanzemulsion nach einem der Anspruche 1 bis 7 in unverdünntem Zustand zur Pflege von Fußböden.

## Claims

1. An aqueous self-shine emulsion for the care of floors which has a pH value of 5 to 9 in indiluted form, containing an at least partly water-insoluble polymer compound with a minimum film forming temperature of 0 to 70°C or a mixture of several polymer compounds with this property and 0.05 to 11% by weight of an alcohol from the group consisting of benzyl alcohol, 2-phenylethanol, 2-phenoxyethanol and mixtures thereof.

2. A self-shine emulsion as claimed in claim 1 which has a pH value in undiluted form of 6 to 9.

3. A self-shine emulsion as claimed in claim or 2, in which the content of film-foming polymers is between 10 and 50% by weight and preferably between 11 and 20% by weight.

4. A self-shine emulsion as claimed in any of claims 1 to 3 additionally containing 1 to 20% by weight of wax from the group of polyethylene waxes, oxidized polyethylene waxes, montan ester waxes, paraffin waxes, natural waxes and mixtures thereof.

5. A self-shine emulsion as claimed in claim 4 containing 1 to 10% by weight of polyethylene wax.

6. A self-shine emulsion as claimed in any of claims 1 to 5 which mainly contains poly(meth)acrylate as the film-forming polymer.

7. A self-shine emulsion as claimed in any of claims 1 to 6 containing 1 to 5% by weight of an alcohol from the group consisting of benzyl alcohol, 2-phenylethanol, 2-phenoxyethanol and mixtures thereof.

8. The use of the self-shine emulsion claimed in any of claims 1 to 7 in undiluted form for the care of floors.

## Revendications

1. Emulsion aqueuse autobrillante pour l'entretien des sols qui présente un pH compris entre 5 et 9 en état non dilué, contenant un polymère au moins partiellement insoluble dans l'eau avec une température minimale de formation de films comprise entre 0 et 70°C ou un mélange de plusieurs polymères qui présente cette propriété et 0,05 jusqu'à 11 % en poids d'un alcool du groupe de l'alcool benzylique, du 2-phényléthanol, du 2-phénoxyéthanol et de leurs mélanges.

2. Emulsion autobrillante selon la revendication 1, dont le pH en état non dilué est compris entre 6 et 9.

3. Emulsion autobrillante selon une des revendications 1 ou 2, présentant une teneur en polymères filmogènes comprise entre 10 et 50 % en poids, de préférence entre 11 et 20 % en poids.

4. Emulsion autobrillante selon une des revendications 1 à 3, contenant de plus 1 à 20 % en poids de cire du groupe des cires de polyéthylène, des cires oxydées de polyéthylène, des cires d'ester de montane, des cires de paraffine, des cires naturelles et de leurs mélanges.

5. Emulsion autobrillante selon la revendication 4, contenant 1 à 10 % en poids de cire de polyéthylène.

6. Emulsion autobrillante selon une des revendications 1 à 5, contenant en tant que polymère filmogène en majeure partie du poly(méth)acrylate.

7. Emulsion autobrillante selon une des revendications 1 à 6, contenant 1 jusqu' a 5 % en poids d'un alcool du groupe de l'alcool blenzylique, du 2-phényléthanol, du 2-phénoxyéthanol et de leurs mélanges.

8. Utilisation d'un émulsion autobrillante selon une des revendications 1 à 7 à l'état non dilué pour l'entretien des sols.
